# EUROPÄISCHE PATENTSCHRIFT

(11) **EP 3 976 943 B1**
(45) Veröffentlichungstag und Bekanntmachung des Hinweises auf die Patenterteilung: **03.04.2024**
(21) Anmeldenummer: 20722218.3
(22) Anmeldetag: 14.04.2020
(51) Int. Cl.: F01M 11/12, G01F 23/04

(54) **VERSCHLUSSSTOPFEN UND ÖLPEILSTAB MIT VERRIEGELUNG DURCH FIXIERNASEN**
CLOSING PLUG AND OIL DIPSTICK WITH A LOCKING MECHANISM USING FIXING PROJECTIONS
BOUCHON DE FERMETURE ET JAUGE D'HUILE COMPRENANT UN VERROUILLAGE PAR ERGOT DE FIXATION

(30) Priorität: 31.05.2019 DE 102019003809
(43) Veröffentlichungstag der Anmeldung: 06.04.2022
(73) Patentinhaber: DEUTZ Aktiengesellschaft, 51149 Köln (DE)
(72) Erfinder: KLOSTERBERG, Johannes, 53913 Swisttal (DE); WERNER, Thomas, 50858 Köln (DE)
(86) Internationale Anmeldenummer: PCT/EP2020/000084
(87) Internationale Veröffentlichungsnummer: WO 2020/239247

(56) Entgegenhaltungen:
- EP-A1- 1 376 075
- EP-B1- 1 376 075
- WO-A2-03/054491
- DE-A1-102014 105 832
- FR-A1- 2 774 170
- FR-A1- 2 906 364
- FR-E- 73 214
- US-B1- 6 227 921

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf unter Bildung eines Brennraums abgedeckten Zylinder bewegbar ist und in dem Zylinderkopf Gaswechselventile angeordnet sind, die von einer Nockenwelle betätigt werden, die über ein Getriebe mit einem auf der Kurbelwelle angeordneten Rädertriebzahnrad verbunden ist, wobei weiterhin in den Brennraum von einem Einspritzpumpenelement geförderter Kraftstoff einspritzbar ist und die einen Verschlussstopfen und einen Ölpeilstab mit einer Verriegelung durch Fixiernasen aufweist.

Elemente zum Verschließen einer Bohrung im allgemeinen Sinne sind in vielfältiger Weise bekannt, siehe zum Beispiel die EP1376075 A1.

Vergleicht man die ausgeführten Konstruktionen, so lassen sich diese in vier wesentliche Klassen (Konstruktionsprinzipien) einteilen:
a. Verschluss mittels Verschlussschraube,
b. Verschluss mittels eingepresstem Deckel oder Stopfen,
c. Verschluss durch angeschraubten Deckel,
d. durch Formschluss fixierter Stopfen.

Soll der Verschluss dazu gegen ein Medium abdichten, so kann dies auf folgende Arten erfolgen:
a.) durch einen Dichtring, welcher beim Anzug einer Verschlussschraube verpresst wird,
b.) durch Dichtmittel am Gewinde einer Verschlussschraube,
c.) durch die Verpressung eines Deckels oder Stopfens gegen die Bohrungswand. Oftmals kommt zusätzlich ein Dichtmittel zum Einsatz.
d.) durch einen Verschlussdeckel unter Anwendung eines O-Ringes, Dichtungspapier oder eine Blechsickendichtung. Die Befestigung des Deckels geschieht über separate Gewindebohrungen in Nähe der zu verschließenden Bohrung.

Für den hier betrachteten Anwendungsfall bzw. die Aufgabenstellung "Verschließen einer Ölpeilstabbohrung" haben alle drei genannten Prinzipien Nachteile. Wesentlich ist dabei die Forderung der Demontierbarkeit und nach Möglichkeit auch Wiederverwendbarkeit. Ferner darf die Bohrungsoberfläche nicht beschädigt werden. So soll es bsw. möglich sein, den Verschlussstopfen auf der linken Motorseite zu entfernen, dort den Ölpeilstab der rechten Motorseite zu verbauen und die nun offene Öffnung auf der rechten Motorseite durch den zuvor demontierten Stopfen zu verschließen. Soll hierbei für den Verschluss eines der oben genannten Konstruktionsprinipien zur Anwendung kommen, so bedeutet dies:
zu a: Das Einbringen eines Innengewindes für eine Verschlussschraube ist nicht möglich, da in dem Gewindebereich der O-Ring des Ölpeilstabes zur Anlage kommen würde. Der Peilstab müsste daher angepasst werden. Zudem wäre am Ölpeilstabbutzen am Kurbelgehäuse Material aufzulegen (=>Werkzeugänderung). Das zusätzliche Gewinde in der Bohrung würde weiterhin die Bearbeitungskosten des Kurbelgehäuses erhöhen.
zu b: Ein eingepresster Verschlussdeckel oder Stopfen wäre nur schwer demontierbar und würde wahrscheinlich zerstört. Zudem könnte die Dichtfläche bei der Demontage des Stopfens beschädigt werden.
zu c: Ein angeschraubter Deckel würde zusätzliche Befestigungsgewinde am Kurbelgehäuse und damit eine Werkzeuganpassung und erhöhte Bearbeitungskosten am Kurbelgehäuse verursachen.
zu d: Das Einbringen einer Nut oder ähnliches, in welches eine Nase am Verschlussstopfen einrastet, wäre am Kurbelgehäuse teuer einzubringen.

Daran ist nachteilig, dass die beschriebenen Varianten voluminös und teuer sind.

Der Erfindung liegt die Aufgabe zugrunde, eine Brennkraftmaschine bereitzustellen, die zuverlässig dicht und wiederverwendbar ist und dies bei vertretbaren Kosten.

Diese Aufgabe wird dadurch gelöst, dass die neue Lösung das Prinzip des Formschlusses verwendet. Jedoch ist hierzu keine Veränderung und Verteuerung des Kurbelgehäuses notwendig. Die Lösung ist zerstörungsfrei demontierbar und führt zu keiner Beschädigung der O-Ring Dichtfläche für den Ölpeilstab. Die Lösung kann zudem wiederverwendet werden.

Weitere vorteilhafte Ausgestaltungen der Erfindung sind der Zeichnungsbeschreibung zu entnehmen, in der ein in den Figuren dargestelltes Ausführungsbeispiel näher beschrieben ist. Es zeigen:
- Fig. 1:: einen Verschlussstopfen, im Kurbelgehäuse montiert,
- Fig. 2:: einen Verschlussstopfen mit Zentriernasen,
- Fig. 3:: Ölpeilstab mit Fixierung durch Zentriernasen im Kurbelgehäuse.

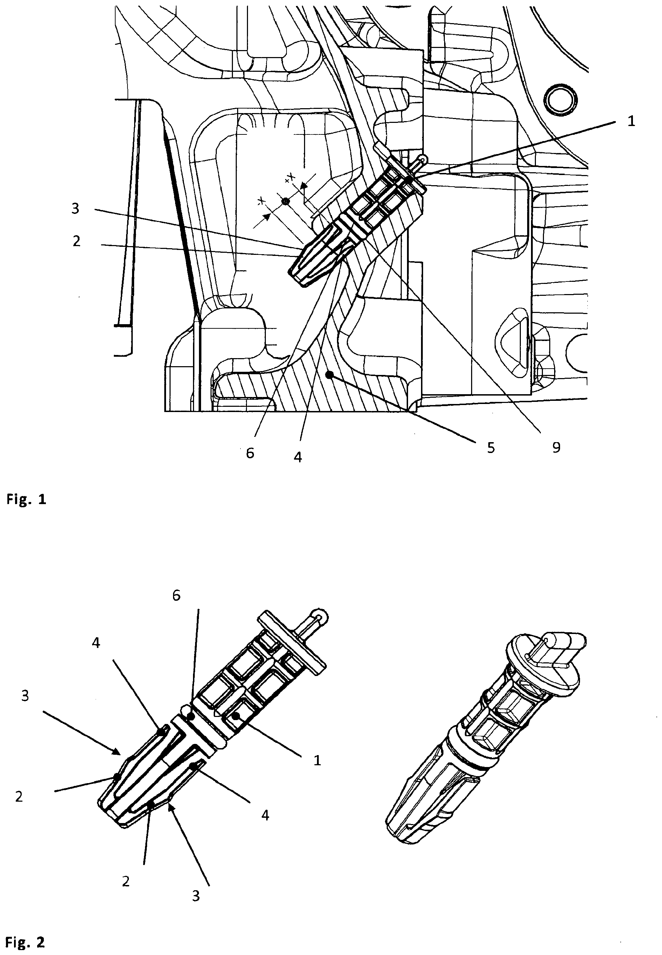

Die Figur 1 zeigt einen Verschlussstopfen 1 in einem Verschlussstopfenkanal 9 montiert, wobei der Verschlussstopfenkanal 9 in einem Kurbelgehäuse 5 angeordnet ist. Zur Abdichtung des Verschlussstopfenkanal 9 dient ein auf dem Verschlussstopfen 1 angeordneter O-Ring 6. Auf dem Verschlussstopfen 1 sind unterhalb des O-Rings 6 in Richtung Inneres des Kurbelgehäuses 5 die Zentrier-Nasen 2, die Verdickung 3 und das Endstück 4 angeordnet.

In Figur 2 wird ein Verschlussstopfen 1 mit Zentriernasen 2 offenbart, der einen O-Ring 6 aufweist und unterhalb des O-Rings 6 in Richtung der Zentrier-Nasen 2, die Verdickung 3 und das Endstück 4 angeordnet hat.

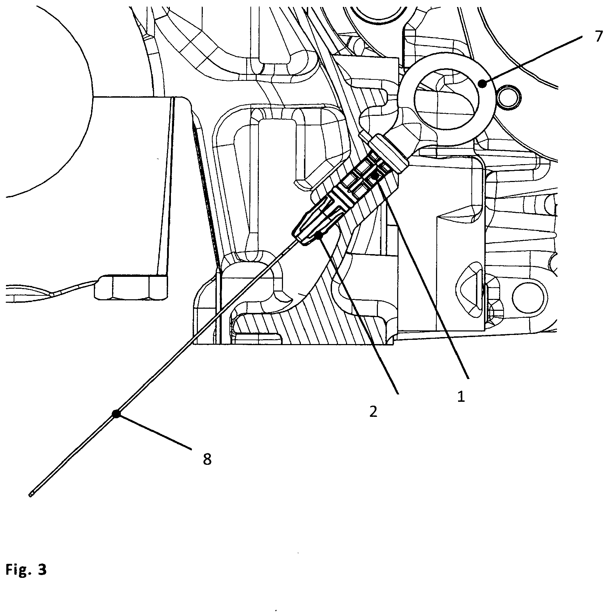

Das besonderes Merkmal der neuen Lösung sind zwei Fixiernasen 2 am Ende des Stopfens 1, wie dies in den Figuren 1 bis 3 zu sehen ist. Beim Einsetzen des Stopfens 1 in die Bohrung oder auch den Verschlussstopfenkanal 9 des Kurbelgehäuses 5 werden die Nasen 2 zunächst zusammengedrückt, kurz vor Erreichen der Endeinbauposition spreizen die Nasen dann wieder auf, wie dies in den Figuren 1 und 3 zu sehen ist. Die Verdickung 3 an den Nasen 2 verriegelt den Stopfen 1 hierbei gegen eine kraftfreie Demontage. Durch die konstruktiv beeinflussbare Steifigkeit der Nasen 2, sowie der Geometrie der Verdickung 3 lässt sich die zur Montage notwendige Kraft einstellen. Die Verdickung an der Nase wird im Weiterem so positioniert, dass einerseits bei negativen Gussveratz (-x) die Verdickung nicht in der Bohrung verbleibt, wie dies auch in Figur 1 zu sehen ist. Es käme sonst zu keiner Klemmwirkung. Andererseits darf bei positiven Gussversatz (+x) das Endstück 4 der Nase nicht ganz aus der Bohrungswand heraus kommen. Das Endstück der Nasen würde sich sonst selbst hinter der Bohrung verkeilen und eine zerstörungsfreie Demontage des Stopfens 1 nicht mehr zulassen.

Zur Abdichtung erhält der Stopfen 1 einen O-Ring 6.

Das so beschriebene Befestigungsprinzip ist im Weiteren auf einen Ölpeilstab 8 übertragbar, wie dieser in Figur 3 offenbart wird. Dieser besteht aus dem Stopfenkörper 1, ergänzt um den Griffbereich 7 und den Ölpeilstab 8. Die Figur 3 zeigt einen Verschlussstopfen 1 in einem Verschlussstopfenkanal 9 montiert, wobei der Verschlussstopfenkanal 9 in einem Kurbelgehäuse 5 angeordnet ist. Zur Abdichtung des Verschlussstopfenkanals 9 dient ein auf dem Verschlussstopfen 1 angeordneter O-Ring 6. Auf dem Verschlussstopfen 1 sind unterhalb des O-Rings 6 in Richtung Inneres des Kurbelgehäuses 5 die Zentrier-Nasen 2, die Verdickung 3 und das Endstück 4 angeordnet.

### Bezugszeichenliste

- 1: Verschlussstopfen
- 2: Zentrier-Nasen
- 3: Verdickung
- 4: Endstück
- 5: Kurbelgehäuse
- 6: O-Ring
- 7: Griffbereich
- 8: Ölpeilstab
- 9: Verschlussstopfenkanal

## Patentansprüche

1. Brennkraftmaschine, insbesondere Dieselbrennkraftmaschine, mit einem Kurbelgehäuse (5), in dem eine Kurbelwelle drehbar gelagert ist, an der zumindest ein einen Kolben tragendes Pleuel angelenkt ist,
wobei der Kolben in einem von einem Zylinderkopf unter Bildung eines Brennraums abgedeckten Zylinder bewegbar ist und in dem Zylinderkopf Gaswechselventile angeordnet sind, die von einer Nockenwelle betätigt werden,
wobei weiterhin in den Brennraum von einem Einspritzpumpenelement geförderter Kraftstoff einspritzbar ist und die einen Verschlussstopfen (1) aufweist, der in einem Verschlussstopfenkanal (9) montiert ist,
**dadurch gekennzeichnet,**
**dass** der Verschlussstopfen (1) zur Abdichtung des Verschlussstopfenkanals (9) einen O-Ring (6) aufweist, und
**dass** der Verschlusstopfen (1) zwei Zentrier-Nasen (2) umfasst, die sich jeweils von einem Ende des Verschlussstopfens (1) in Richtung des O-Rings (6) erstrecken.

2. Brennkraftmaschine nach Anspruch 1,
**dadurch gekennzeichnet,**
**dass** sie einen Ölpeilstab (8) aufweist.

3. Brennkraftmaschine nach einem oder mehreren der vorgenannten Ansprüche,
**dadurch gekennzeichnet,**
**dass** der Ölpeilstab (8) und der Verschlussstopfen (1) ein Bauteil bilden.

4. Brennkraftmaschine nach einem oder mehreren der vorgenannten Ansprüche,
**dadurch gekennzeichnet,**
**dass** der Verschlussstopfen (1) mit einer Verriegelung durch die Zentrier-Nasen (2) versehen ist.

5. Brennkraftmaschine nach einem oder mehreren der vorgenannten Ansprüche,
**dadurch gekennzeichnet,**
**dass** der O-Ring (6) am Verschlussstopfen (1) oberhalb der Zentrier-Nasen (2), einer Verdickung (3) und einem Endstück (4) angeordnet ist.

6. Brennkraftmaschine nach nach Anspruch 5
**dadurch gekennzeichnet,**
**dass** die Verdickung (3) im montierten Zustand um das Maß (-x) in das Innere des Kurbelgehäuses (5) hineinragt.

7. Brennkraftmaschine nach Anspruch 5 oder 6
**dadurch gekennzeichnet,**
**dass** das Endstück (4) im montierten Zustand um das Maß (+x) in das Innere des Verschlussstopfenkanals (9) des Kurbelgehäuses (5) hineinragt.

## Claims

1. An internal combustion engine, in particular a diesel internal combustion engine, with a crankcase (5) in which a crankshaft is rotatably mounted, with at least one connecting rod supporting a piston being linked to said crankshaft,
wherein the piston can be moved inside a cylinder which is covered by a cylinder head, thereby forming a combustion chamber, and wherein gas exchange valves which can be actuated by a camshaft are arranged in the cylinder head,
wherein, in addition, fuel conveyed by an injection pump element can be injected into the combustion chamber, the engine having a closing plug (1) mounted in a closing plug channel (9),
**characterized in that**
the closing plug (1) comprises an O-ring (6) for sealing the closing plug channel (9), and
**in that** the closing plug (1) comprises two centering projections (2), each of which extends from one end of the closing plug (1) in the direction of the O-ring (6).

2. The internal combustion engine according to claim 1,
**characterized in that**
it comprises an oil dipstick (8).

3. The internal combustion engine according to one or more of the preceding claims,
**characterized in that**
the oil dipstick (8) and the closing plug (1) form one component.

4. The internal combustion engine according to one or more of the preceding claims,
**characterized in that**
the closing plug (1) is provided with a locking by means of the centering projections (2).

5. The internal combustion engine according to one or more of the preceding claims,
**characterized in that**
the O-ring (6) is arranged on the closing plug (1) above the centering projections (2), a thickened area (3) and an end piece (4).

6. The internal combustion engine according to claim 5,
**characterized in that**
the thickened area (3) extends by the dimension (-x) into the interior of the crankcase (5) in the installed state.

7. The internal combustion engine according to claim 5 or 6,
**characterized in that**
the end piece (4) extends by the dimension (+x) into the interior of the closing plug channel (9) of the crankcase (5) in the installed state.

## Revendications

1. Moteur à combustion interne, en particulier moteur à combustion interne diesel, comprenant un carter (5) dans lequel est monté à rotation un vilebrequin sur lequel est articulée au moins une bielle portant un piston,
le piston étant mobile dans un cylindre recouvert par une culasse, formant une chambre de combustion, et des soupapes d'échange de gaz étant disposées dans la culasse, lesquelles sont actionnées par un arbre à cames,
du carburant acheminé par un élément de pompe d'injection pouvant en outre être injecté dans la chambre de combustion, et qui comprend un bouchon d'obturation (1) monté dans un canal de bouchon d'obturation (9),
**caractérisé en ce que**
le bouchon d'obturation (1) présente un joint torique (6) afin d'assurer l'étanchéité du canal de bouchon d'obturation (9), et
**en ce que** le bouchon d'obturation (1) comprend deux ergots de centrage (2) s'étendant respectivement depuis une extrémité du bouchon d'obturation (1) en direction du joint torique (6).

2. Moteur à combustion interne selon la revendication 1,
**caractérisé en ce que**
il présente une jauge d'huile (8).

3. Moteur à combustion interne selon l'une ou plusieurs des revendications précédentes,
**caractérisé en ce que**
la jauge d'huile (8) et le bouchon d'obturation (1) forment un composant.

4. Moteur à combustion interne selon l'une ou plusieurs des revendications précédentes,
**caractérisé en ce que**
le bouchon d'obturation (1) est pourvu d'un verrouillage à l'aide des ergots de centrage (2).

5. Moteur à combustion interne selon l'une ou plusieurs des revendications précédentes,
**caractérisé en ce que**
le joint torique (6) est disposé sur le bouchon d'obturation (1) au-dessus des ergots de centrage (2), d'un renflement (3) et d'un embout (4).

6. Moteur à combustion interne selon la revendication 5,
**caractérisé en ce que**
le renflement (3), à l'état monté, pénètre de la dimension (-x) à l'intérieur du carter (5).

7. Moteur à combustion interne selon la revendication 5 ou 6
**caractérisé en ce que**
l'embout (4), à l'état monté, pénètre de la dimension (+x) à l'intérieur du canal du bouchon d'obturation (9) du carter (5).
